# EUROPEAN PATENT SPECIFICATION

(11) **EP 1 042 828 B1**
(45) Date of publication and mention of the grant of the patent: **30.01.2008**
(21) Application number: 98963894.5
(22) Date of filing: 14.12.1998
(51) Int. Cl.: H01M 4/30, H01M 4/50, H01M 6/04, H01M 2/16

(54) **ALKALINE ELECTROCHEMICAL CELL WITH BALANCED ACTIVE MATERIALS**
ALKALISCHE ELEKTROCHEMISCHE ZELLE MIT AUSGEGLICHENEM AKTIVSTOFFENINHALT
CELLULE ÉLECTROCHIMIQUE ALCALINE ÉQUILIBRÉE EN MATÉRIAUX ACTIFS

(30) Priority: 31.12.1997 US 2204; 03.04.1998 US 55047
(43) Date of publication of application: 11.10.2000
(73) Proprietor: DURACELL INC., Bethel, Connecticut 06801 (US)
(72) Inventor: HARRIS, Peter, B., Stow, MA 01775 (US); WOODNORTH, Douglas, J., Needham, MA 02194 (US); BRYS, Barbara, Bedford, MA 01730 (US); FARISS, Gregory, A., Poughkeepsie, NY 12603 (US); TAY, George, I., Washaw, NC 28173 (US); CERVERA, James, Medway, MA 06410 (US); HAMILTON, Terry, L., Danbury, CT 06811 (US); HOWARD, Martin, W., Fairfield, CT 06432 (US)
(74) Representative: Ebner von Eschenbach, Jennifer
(86) International application number: PCT/US1998/026487
(87) International publication number: WO 1999/034461

(56) References cited:
- US-A- 4 007 472
- US-A- 5 300 371
- US-A- 5 340 666
- US-A- 5 342 712
- US-A- 5 660 953
- DATABASE WPI Section Ch, Week 198133 Derwent Publications Ltd., London, GB; Class L03, AN 1981-59732D XP002292859 & JP 56 079854 A (MATSUSHITA ELEC IND CO LTD) 30 June 1981 (1981-06-30)

## Description

The invention relates to batteries.

Batteries, such as alkaline batteries, are commonly used as energy sources. Generally, alkaline batteries have a cathode, an anode, a separator and an electrolytic solution. The cathode is typically formed of manganese dioxide, carbon particles and a binder. The anode can be formed of a gel including zinc particles. The separator is usually disposed between the cathode and the anode. The electrolytic solution, which is dispersed throughout the battery, can be a hydroxide solution.

The invention relates to batteries, such as alkaline batteries, having a large amount of electrolytic solution relative to the amount of manganese dioxide and/or zinc particles. These batteries have good performance characteristics. For example, the batteries can exhibit high energy output at a high discharge rate, such as a discharge rate equal to at least the battery's capacity (in units of Ampere-hours) discharged in one hour. The batteries can have various industry standard sizes, such as AA, AAA, AAA, C or D.

US-A-4007472 discloses a flat primary battery with an improved capacity. US-A-5300371 is directed to rechargeable manganese dioxide cells. US-A-5340666 discloses a rechargeable alkaline manganese cell. Finally, US-A-5342712 is directed to additives for primary electrochemical cells.

In one aspect, the invention features an alkaline battery, comprising: a cathode including manganese dioxide; an anode include zinc particles; an electrolytic solution; and a separator disposed between the cathode and the anode, wherein a weight ratio of the manganese dioxide to the electrolytic solution dispersed through the anode, cathode, and separator is from about 2.2 to about 2.9 and a weight ratio of the zinc particles to the electrolytic solution dispersed throughout the anode, cathode, and separator is from about 0.9 to about 1.25, and wherein the cathode includes carbon particles and has a porosity of from about 21 % to about 28%, and the anode has a porosity of from about 2 grams of zinc particles per cubic centimeter to about 2.45 grams of zinc particles per cubic centimeter.

In another aspect, the invention features an alkaline battery wherein the weight ratio of manganese dioxide to electrolytic solution is from about 2.5 to about 2.9, and the weight ratio of zinc particles to electrolytic solution is from about 1.1 to about 1.25.

In a further aspect, the invention features an alkaline battery wherein the weight ratio of manganese dioxide to electrolytic solution is from about 2.5 to about 2.65, and the weight ratio of zinc particles to electrolytic solution is from about 0.9 to about 1.2

The invention also relates to AA alkaline batteries that give at least 150 pulses to discharge to 1 Volt according to the cc photo test (described below), at least about 0.6 hours to discharge to 1 Volt according to the 1 Watt continuous test (described below), at least about 1.6 hours to discharge to 1 Volt according to the pulsed test (described below) and/or at least about 1.5 hours to discharge to 1.1 Volts according to the half Watt rm test (described below).

The invention further relates to AAA alkaline batteries that give at least about 0.65 hours to discharge to 1 Volt according to the half Watt continuous test (described below), at least about 0.35 hours to discharge to 1 Volt according to the pulsed test (described below), at least about 0.4 hours to discharge to 1.1 Volts according to the half Watt rm test (described below) and/or at least about 2 hours to discharge to 1.1 Volts according to the quarter Watt rm test (described below).

The separator can include a nonwoven, non-membrane material and a second nonwoven, non-membrane material disposed along a surface of the first material. The separator can be devoid of a membrane layer or an adhesive layer disposed between the nonwoven, non-membrane materials. A membrane material refers to a material having an average pore size of less than about 0.5 micron, whereas a non-membrane material refers to a material having an average pore size of at least about 5 microns.

The cathode can include manganese dioxide and nonsynthetic, nonexpanded graphite particles having an average particle size of at most about 20 microns as measured using a Sympatec HELIOS analyzer. For a given sample of graphite particles, the average particle size is the particle size for which half the volume of the sample has a smaller particle size.

"Nonsynthetic graphite particles" refer to graphite particles that are prepared without using an industrial or laboratory graphitization process.

"Nonexpanded graphite particles" refer to graphite particles that have undergone no industrial or laboratory expansion process.

The cathode has a porosity of from about 21% to about 28%. The cathode porosity corresponds to the relative volume of the cathode that is not taken up by solid material, such as, for example, manganese dioxide, carbon particles and binder.

The anode has a porosity of from about 2 grams of zinc particles to about 2.45 grams of zinc particles per cubic centimeter of anode volume that is taken up by liquid or solid material.

The batteries can be AA or AAA batteries that can demonstrate good results when tested according to the cc photo test, the 1 Watt continuous test, the half Watt continuous test, the pulsed test, the half Watt rm test and/or the quarter Watt rm test. These tests are described below.

Other features and advantages of the invention will be apparent from the description of the preferred embodiments thereof and from the claims.

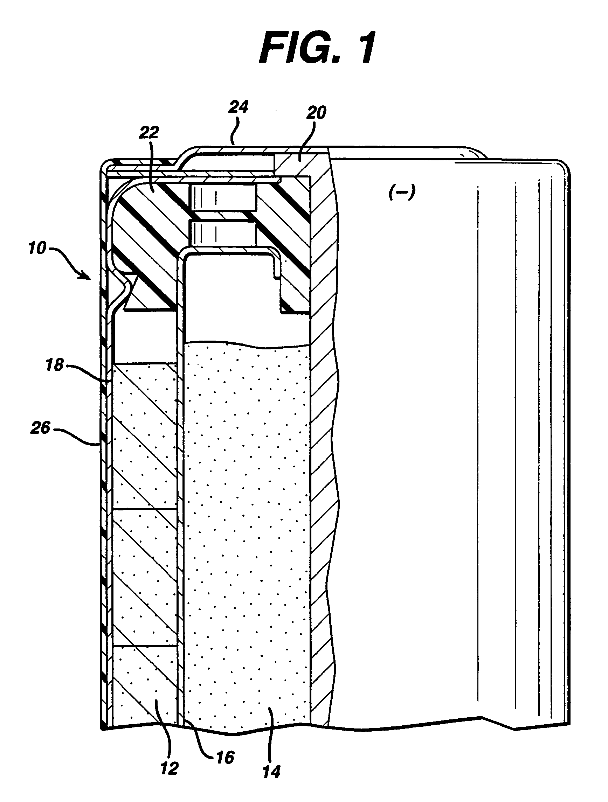

The figure is a cross-sectional view of a battery.

The batteries are alkaline batteries that have a weight ratio of manganese dioxide to electrolytic solution of from about 2.2 to about 2.9 and a weight ratio of zinc particles to electrolytic solution of from about 0.9 to about 1.25. In some embodiments, the weight ratio of manganese dioxide to electrolytic solution is from about 2.5 to about 2.9, and the weight ratio of zinc particles to electrolytic solution is from about 1.1 to about 1.25. In other embodiments, the weight ratio of manganese dioxide to electrolytic solution is from about 2.5 to about 2.65, and the weight ratio of zinc particles to electrolytic solution is from about 0.9 to about 1.2. These weight ratios are based on the amount of electrolytic solution dispersed throughout the cathode, anode and separator.

Referring to the figure, a battery 10 is shown that has a cathode 12, an anode 14, a separator 16, an outer wall 18 that contacts the outer diameter of cathode 12 and insulating layer 26. Battery 10 further includes an anode collector 20 that passes through a seal member 22 and into anode 14. The upper end of anode collector 20 is connected to a negative end cap 24 which serves as the negative external terminal of battery 10. Layer 26 can be formed of an electrically nonconducting material, such as a heat shrinkable plastic. In addition, an electrolytic solution is dispersed throughout battery 10.

Cathode 12 can include any of the standard forms of manganese dioxide used in battery cathodes. Distributors of such manganese dioxide include Kerr McGee, Co., Broken Hill Proprietary, Chem Metals, Co., Tosoh, Delta Manganese, Mitsui Chemicals and JMC.

In certain embodiments, cathode 12 can have from about 8.9 grams of manganese dioxide to about 9.8 grams of manganese dioxide. In these embodiments, cathode 12 preferably includes from about 9.3 grams to about 9.8 grams of manganese dioxide, more preferably from about 9.4 grams to about 9.65 grams of manganese dioxide, and most preferably from about 9.45 grams to about 9.6 grams of manganese dioxide.

In other embodiments, cathode 12 preferably has from about 4 grams to about 4.3 grams of manganese dioxide, more preferably from about 4.05 grams to about 4.25 grams of manganese dioxide, and most preferably from about 4.1 grams to about 4.2 grams of manganese dioxide.

Typically, cathode 12 further includes carbon particles. These carbon particles can be any of the standard carbon particles used in cathodes of batteries. The particle size is limited only by the dimensions of cathode 12. They can be synthetic or nonsynthetic, and they can be expanded or nonexpanded.

In certain embodiments, the carbon particles are nonsynthetic, nonexpanded graphite particles. In these embodiments, the graphite particles preferably have an average particle size of less than about 20 microns, more preferably from about 2 microns to about 12 microns, and most preferably from about 5 microns to about 9 microns as measured using a Sympatec HELIOS analyzer. Nonsynthetic, nonexpanded graphite particles can be obtained from, for example, Brazilian Nacional de Grafite (Itapecirica, MG Brazil).

The amount of carbon particles within cathode 12 should be high enough to improve the conductivity of cathode 12 while having minimal impact on the energy capacity of battery 10. In some embodiments, cathode 12 preferably includes from about 4 weight percent to about 10 weight percent carbon particles, more preferably from about 5 weight percent to about 9 weight percent carbon particles, and most preferably from about 6 weight percent to about 8 weight percent carbon particles. These weight percentages correspond to when the electrolytic solution is not dispersed within cathode 12.

In some embodiments, cathode 12 may further include a binder. Examples of binders for cathode 12 include polyethylene powders, polyacrylyamides, Portland cement and fluorocarbon resins, such as PVDF and PTFE. In certain embodiments, cathode 12 includes a polyethylene binder sold under the tradename coathylene HA-1681 (Hoescht).

When cathode 12 includes a binder, the binder preferably makes up less than about 1 weight percent of cathode 12, more preferably from about 0.1 weight percent to about 0.5 weight percent of cathode 12, and most preferably about 0.3 weight percent of cathode 12. These weight percentages correspond to when the electrolytic solution is not dispersed within cathode 12.

Cathode 12 can include other additives. Examples of these additives are disclosed in U.S. Patent 5,342,712, which is hereby incorporated by reference. In some embodiments, cathode 12 preferably includes from about 0.2 weight percent to about 2 weight percent TiO₂, more preferably about 0.8 weight percent TiO₂.

Cathode 12 can be a single pellet of material. Alternatively, cathode 12 can be formed of a number of cathode pellets that are stacked on top of each other. In either case, the cathode pellets can be made by first mixing the manganese dioxide, carbon particles and optionally a binder. For embodiments in which more than one pellet is used, the mixture can be pressed to form the pellets. The pellet(s) are fit within battery 10 using standard processes. For example, in one process, a core rod is placed in the central cavity of battery 10, and a punch is then used to pressurize the top most pellet. When using this process, the interior of wall 18 can have one or more vertical ridges that are spaced circumferentially around wall 18. These ridges can assist in holding cathode 12 in place within battery 10.

In embodiments in which cathode 12 is formed of a single pellet, the powder can be placed directly within battery 10. A retaining ring can be set in place, and an extrusion rod can pass through the ring, densifying the powder and forming cathode 12.

In certain embodiments, a layer of conductive material can be disposed between wall 18 and cathode 12. This layer may be disposed along the inner surface of wall 18, along the outer circumference of cathode 12 or both. Typically, this conductive layer is formed of a carbonaceous material. Such materials include LB1000 (Timcal), Eccocoat 257 (W.R. Grace & Co.), Electrodag 109 (Acheson Industries, Inc.), Electrodag 112 (Acheson) and EB005 (Acheson). Methods of applying the conductive layer are disclosed in, for example, Canadian Patent No. 1,263,697, which is hereby incorporated by reference.

When cathode 12 is disposed within battery 10 by a pressing process, providing a conductive layer between wall 18 and cathode 12 can decrease the amount of pressure used to place the pellet(s) within battery 10. Thus, the porosity of cathode 12 can be made relatively high without causing the pellet(s) to be crushed or form cracks. However, if the porosity of cathode 12 is too low, an insufficient amount of electrolyte can be dispersed within cathode 12, reducing the efficiency of battery 10. Therefore, cathode 12 should have a porosity of from about 21% to about 28%, more preferably from about 25% to about 27%, and most preferably about 26%.

Anode 14 can be formed of any of the standard zinc particle materials used in battery anodes. Often, anode 14 is formed of a zinc gel that includes the zinc particles, a gelling agent and minor amounts of additives, such as gassing inhibitors. In addition, a portion of the electrolytic solution is dispersed throughout anode 14.

In some embodiments, anode 14 preferably includes from about 3.7 grams to about 4.25 grams of zinc particles, more preferably from about 3.8 grams to about 4.15 grams of zinc particles, and most preferably from about 3.9 grams to about 4.05 grams of zinc particles.

In other embodiments, anode 14 preferably includes from about 1.5 grams to about 1.9 grams of zinc particles, more preferably from about 1.55 grams to about 1.85 grams of zinc particles, and most preferably from about 1.65 grams to about 1.75 grams of zinc particles.

In certain embodiments, anode 14 preferably includes from about 64 weight percent to about 76 weight percent zinc particles, more preferably from about 66 weight percent to about 74 weight percent zinc particles, and most preferably from about 68 weight percent to about 72 weight percent zinc particles. These weight percentages correspond to when the electrolytic solution is dispersed throughout anode 14.

If the porosity of anode 14 is too high, the energy capacity of battery 10 is reduced, but, if the porosity of anode 14 is too low, an insufficient amount of electrolyte can be dispersed within anode 14. Therefore, in certain embodiments, anode 14 preferably includes from about 2 grams of zinc particles to about 2.45 grams of zinc particles per cubic centimeter of anode, more preferably a porosity of from about 2.1 grams of zinc particles to about 2.35 grams of zinc particles per cubic centimeter of anode, and most preferably a porosity of from about 2.15 grams of zinc particles to about 2.3 grams of zinc particles per cubic centimeter of anode.

Typically, anode 14 includes one or more gelling agents. Such gelling agents include polyacrylic acids, grafted starch materials, salts of polyacrylic acids, polyacrylates, carboxymethylcellulose or combinations thereof. Examples of such polyacrylic acids are Carbopol 940 (B.F. Goodrich) and Polygel 4P (3V), and an example of a grafted starch material is Waterlock A221 (Grain Processing Corporation, Muscatine, IA). An example of a salt of a polyacrylic acid is CL15 (Allied Colloids). In some embodiments, anode 14 preferably includes at from about 0.2 weight percent to about 1 weight percent total gelling agent, more preferably from about 0.4 weight percent to about 0.7 weight percent total gelling agent, and most preferably from about 0.5 weight percent to about 0.6 weight percent total gelling agent. These weight percentages correspond to when the electrolytic solution is dispersed throughout anode 14.

Anode 14 can also include gassing inhibitors. These gassing inhibitors can be inorganic materials, such as bismuth, tin, lead and indium. Alternatively, gassing inhibitors can be organic compounds, such as phosphate esters, ionic surfactants or nonionic surfactants. Examples ionic surfactants are disclosed in, for example, U.S. Patent No. 4,777,100, which is hereby incorporated by reference.

Separator 16 can have any of the conventional designs for battery separators. In some embodiments, separator 16 is formed of two layers of nonwoven, non-membrane material with one layer being disposed along a surface of the other. To minimize the volume of separator 16 while providing an efficient battery, each layer of nonwoven, non-membrane material can have a basis weight of about 54 grams per square meter, a thickness of about 5.4 mils when dry and a thickness of about 10 mils when wet. In these embodiments, the separator preferably does not include a layer of membrane material or a layer of adhesive between the nonwoven, non-membrane layers. Generally, the layers can be substantially devoid of fillers, such as inorganic particles.

In other embodiments, separator 16 includes an outer layer of cellophane with a layer of nonwoven material. Separator 16 also includes an additional layer of nonwoven material. The cellophane layer can be adjacent cathode 12 or anode 14. Preferably, the nonwoven material contains from about 78 weight percent to about 82 weight percent PVA and from about 18 weight percent to about 22 weight percent rayon with a trace of surfactant. Such nonwoven materials are available from PDM under the tradename PA36.

The electrolytic solution dispersed throughout battery 10 can be any of the conventional electrolytic solutions used in batteries. Typically, the electrolytic solution is an aqueous hydroxide solution. Such aqueous hydroxide solutions include, for example, potassium hydroxide solutions and sodium hydroxide solutions. In some embodiments, the electrolytic solution is an aqueous potassium hydroxide solution including from about 33 weight percent to about 38 weight percent potassium hydroxide.

The amount of electrolytic solution dispersed throughout cathode 12, anode 14 and separator 16 can be such that the weight ratio of manganese dioxide to electrolytic solution and zinc particles to electrolytic solution are within the ranges noted above.

In certain embodiments, battery 10 preferably includes from about 3.4 grams to about 3.9 grams of electrolytic solution, more preferably from about 3.45 to about 3.65 grams of electrolytic solution, and most preferably from about 3.5 grams to about 3.6 grams of electrolytic solution.

In other embodiments, battery 10 preferably includes from 1.6 grams to about 1.9 grams of electrolytic solution, more preferably from about 1.65 grams to about 1.85 grams of electrolytic solution, and most preferably from about 1.7 grams to about 1.8 grams of electrolytic solution.

The batteries can be AA or AAA batteries that demonstrate good results when tested according to the cc photo test, the 1 Watt continuous test, the half Watt continuous test, the pulsed test, the half Watt rm test and/or the quarter Watt continuous test. These tests are described below.

Battery 10 can be a AA battery or battery that offers excellent performance according to the cc photo test (described below). For example, when discharged to 1 Volt according to the cc photo test, the AA battery can give at least 150 pulses, at least about 175 pulses, at least about 185 pulses or at least about 200 pulses. When discharged to 0.8 Volts according to the cc photo test, the AA battery can give at least 350 pulses, at least about 375 pulses, at least about 385 pulses or at least about 400 pulses.

Battery 10 can be a AA battery that offers excellent performance according to the 1 Watt continuous test (described below). For example, when discharged to 1 Volt according to the 1 Watt continuous test, the AA battery can give at least about 0.6 hours, at least about 0.65 hours, at least about 0.7 hours or at least about 0.75 hours. When discharged to 0.8 Volts according to the 1 Watt continuous test, the AA battery can give at least 0.95 hours, at least about 1 hour, at least about 1.05 hours or at least about 1.1 hours.

Battery 10 can be a AA battery that offers excellent performance according to the pulsed test (described below). For example, when discharged to 1 Volt according to the pulsed test, the AA battery can give at least about 1.6 hours, at least about 1.75 hours, at least about 2 hours or at least about 2.15 hours. When discharged to 0.8 Volts according to the pulsed test, the AA battery can give at least 2.75 hours, at least about 3 hours, at least about 3.25 hours or at least about 3.3 hours.

Battery 10 can be a AA battery that offers excellent performance according to the half Watt rm test (described below). For example, when discharged to 1.1 Volts according to the half Watt rm test, the AA battery can give at least about 1.5 hours, at least about 2 hours, at least about 2.5 hours or at least about 2.65 hours. When discharged to 0.9 Volts according to the half Watt rm test, the AA battery can give at least 2.9 hours, at least about 3 hours, at least about 3.25 hours or at least about 3.4 hours.

Battery 10 can be a AAA battery that offers excellent performance according to the half Watt continuous test (described below). For example, when discharged to 1 Volt according to the half Watt continuous test, the AAA battery can give at least about 0.65 hours, at least about 0.7 hours, at least about 0.75 hours or at least about 0.8 hours. When discharged to 0.9 Volts according to the half Watt continuous test, the AAA battery can give at least 0.9 hours, at least about 0.95 hours, at least about 1.0 hour or at least about 1.05 hours.

Battery 10 can be a AAA battery that offers excellent performance according to the pulsed test (described below). For example, when discharged to 1 Volt according to the pulsed test, the AAA battery can give at least about 0.35 hours, at least about 0.4 hours, at least about 0.45 hours or at least about 0.5 hours. When discharged to 0.9 Volts according to the pulsed test, the AAA battery can give at least 0.65 hours, at least about 0.7 hours, at least about 0.75 hours or at least about 0.8 hours.

Battery 10 can be a AAA battery that offers excellent performance according to the half Watt rm test (described below). For example, when discharged to 1.1 Volts according to the half Watt rm test, the AAA battery can give at least about 0.4 hours, at least about 0.45 hours, at least about 0.5 hours or at least about 0.55 hours. When discharged to 0.9 Volts according to the half Watt rm test, the AAA battery can give at least 0.9 hours, at least about 0.95 hours, at least about 1 hour or at least about 1.05 hours.

Battery 10 can be a AAA battery that offers excellent performance according to the quarter Watt rm test (described below). For example, when discharged to 1.1 Volts according to the quarter Watt rm test, the AAA battery can give at least about 2 hours, at least about 2.1 hours, at least about 2.2 hours or at least about 2.3 hours. When discharged to 0.9 Volts according to the quarter Watt rm test, the AAA battery can give at least 3.1 hours, at least about 3.25 hours, at least about 3.4 hours or at least about 3.5 hours.

### Example I

AA batteries were prepared with the following components. The cathode included about 9.487 grams of manganese dioxide (Kerr-McGee, Co.), about 0.806 grams of nonsynthetic, nonexpanded graphite having an average particle size of about 7 microns (Brazilian Nacional de Grafite) and about 0.3 weight percent of coathylene HA-1681. The anode included about 3.976 grams of zinc particles, about 50 ppm surfactant (RM510, Rhone Poulenc) relative to zinc, and about 0.5 weight percent total gelling agent (Carbopol 940 and A221). The porosity of the cathode was about 26%, and the porosity of the anode was about 2.173 grams of zinc per cubic centimeter of anode. The separator was a two-layer structure with each layer formed of a nonwoven material including about 57 weight percent PVA fibers (about 0.5 denier at 6 millimeters), about 30 weight percent cellulose fibers (about 1.5 denier at 6 millimeters) and about 13 weight percent PVA binder. Each layer was about 5.4 mils thick when dry and about 10 mils thick when wet. Each layer had a basis weight of about 54 grams per square meter. The separator did not include an adhesive, and the layers were substantially devoid of any filler. The battery also included about 3.598 grams of an aqueous potassium hydroxide (about 35.5 weight percent potassium hydroxide) solution. A thin coating of EB005 (Acheson) was disposed between the outer wall of the battery and the outer periphery of the cathode.

The AA batteries were stored at a temperature of from about 20.1°C to about 22.1°C for five days. The AA batteries were then stored according to the following procedure.

Each battery is usually examined for leakage or material damage and identified such that battery identification can be maintained throughout the test program. The batteries are oriented on their sides in holding trays such that the batteries are not in physical contact with each other. The holding trays are made to be resistant to heat and electrolytes. The trays are stored for 1 day at ambient conditions, after which the trays are placed in a preheated chamber. The trays are spaced so that there is at least about 5 cm (2 inches) of space between the chamber wall, and the tray above, below, or adjacent to each tray. The following 24 hour test sequence, shown in Table I, is repeated for 14 days.

The trays are removed from the chamber and each battery is visually examined for leakage or material damage.

**Table I**

| Cycle Number | Time (Hrs.) | Temperature (± 2°C) |
|---|---|---|
| 1 | 6.0 | Ramp from 28 to 25 |
| 2 | 4.5 | Ramp from 25 to 34 |
| 3 | 2.0 | Ramp from 34 to 43 |
| 4 | 1.0 | Ramp from 43 to 48 |
| 5 | 1.0 | Ramp from 48 to 55 |
| 6 | 1.0 | Ramp from 55 to 48 |
| 7 | 1.0 | Ramp from 48 to 43 |
| 8 | 3.0 | Ramp from 43 to 32 |
| 9 | 4.5 24.0 (1 Day) | Ramp from 32 to 28 |

The following tests were subsequently performed on individual AA batteries. Each test was conducted at a temperature of from about 20.1°C to about 22.1°C.

A AA battery was discharged from an open circuit voltage of about 1.6 Volts under constant current conditions of ten seconds per minute for one hour per day ("the cc photo test"). The AA battery reached 1 Volt after 202 pulses, and the AA battery reached 0.8 Volts after 443 pulses.

A AA battery was continuously discharged from an open circuit voltage of about 1.6 Volts at 1 Watt ("the 1 Watt continuous test"). The AA battery reached 1 Volt after about 0.75 hours, and the AA battery reached 0.8 Volts after about 1.00 hours.

A AA battery was continuously discharged from an open circuit voltage of about 1.6 Volts at a rate that alternated between 1 Watt (3 second pulses) and 0.1 Watt (7 second pulses) ("the pulsed test"). The AA battery reached 1 Volt after about 2.16 hours, and the AA battery reached 0.8 Volts after about 3.72 hours.

A AA battery was discharged from an open circuit voltage of about 1.6 Volts at 0.5 Watts for 15 minutes per hour ("the half Watt rm test"). The AA battery reached 1.1 Volts after about 1.87 hours, and the AA battery reached 0.9 Volts after about 3.34 hours.

### Example II

A AAA battery was prepared. The cathode 12 included about 4.155 grams of manganese dioxide (Kerr McGee, Co.), about 0.353 grams of nonsynthetic, nonexpanded graphite having an average particle size of about 7 microns (Brazilian Nacional de Grafite) and about 0.3 weight percent of coathylene HA-1681. The anode 14 included about 1.668 grams of zinc particles, about 50 ppm surfactant (RM 510, Rhone Poulenc) relative to zinc, and about 0.5 weight percent total gelling agent (Carbopol 940 and A221). The porosity of the cathode was about 26%, and the porosity of the anode was about 2.266 grams of zinc per cubic centimeter of anode 14. The separator included two layers of nonwoven material. The separator was a two-layer structure with each layer formed of a nonwoven material including about 57 weight percent PVA fibers (about 0.5 denier at 6 millimeters), about 30 weight percent cellulose fibers (about 1.5 denier at 6 millimeters) and about 13 weight percent PVA binder. Each layer was about 5.4 mils thick when dry and about 10 mils thick when wet. Each layer had a basis weight of about 54 grams per square meter. The separator did not include an adhesive, and the layers were substantially devoid of any filler. The battery also included about 1.72 grams of an aqueous potassium hydroxide (about 35.5 weight percent) solution. A thin coating of EB005 (Acheson) was disposed between the outer wall of the battery and the outer periphery of the cathode.

The AAA batteries were stored as described in Example I. Each AAA battery was discharged from an open circuit voltage of about 1.6 Volts, and the tests were conducted within the temperature range described in Example I.

A AAA battery was continuously discharged from an open circuit voltage of about 1.6 Volts at one half Watt ("the half Watt continuous test"). The AAA battery reached 1 Volt after about 0.76 hours, and the AAA battery reached 0.8 Volts after about 0.96 hours.

With the pulsed test, a AAA battery took about 0.55 hours to reach 1 Volt, and about 0.84 hours to reach 0.8 Volts.

With the half Watt rm test, a AAA battery took about 0.57 hours to reach 1 Volt, and about 1.08 hours to reach 0.8 Volts.

A AAA battery was discharged from an open circuit voltage of about 1.6 Volts at 0.25 Watts for 15 minutes per hour ("the quarter Watt rm test"). The AAA battery reached 1.1 Volts after about 2.4 hours, and the AAA battery reached 0.9 Volts after about 3.65 hours.

### Example III

AA batteries were prepared with the following components. The cathode included about 9.11 grams of manganese dioxide (40:60 weight mixture of Delta:Tosoh), about 0.810 grams of nonsynthetic, nonexpanded graphite having an average particle size of about 7 microns (Brazilian Nacional de Grafite) and about 0.8 weight percent of titanium dioxide (Kronos). The anode included about 3.89 grams of zinc particles, about 0.88 weight percent total gelling agent (3 V and CL 15), and about 50 ppm of surfactant (RM 510, Rhone Poulenc). The porosity of the cathode was about 23%, and the porosity of the anode was about 2.173 grams of zinc per cubic centimeter of anode. The separator included a layer of nonwoven material (PA 36 A, PDM) a layer of PA36C and a layer of cellophane (1 mil. thick). The cellophane was adjacent to the cathode, and the nonwoven PA36A layer was adjacent to the anode. The battery also included about 3.62 grams of aqueous potassium hydroxide (about 35.5 weight percent potassium hydroxide) solution. A thin coating of EB 005 (Acheson) was disposed between the outer wall of the battery and the outer periphery of the cathode.

The AA batteries were stored at a temperature of from about 20.1°C to about 22.1 °C for about five days according to the protocol described in Example I. The following tests were subsequently performed on individual AA batteries. Each test was conducted at a temperature of from about 20.1 °C to about 22.1 °C.

The AA battery was discharged according to the cc photo test. The AA battery reached one volt after 180 pulses, and the AA battery reached 0.8 volts after 347 pulses.

A AA battery was discharged according to the one Watt continuance test. The AA battery reached 1 volt after about 0.57 hours, and the AA battery reached 0.8 volts after about 0.80 hours.

A AA battery was continuously discharged from an open circuit voltage according to the pulsed test. The AA battery reached 1 volt after about 1.76 hours, and the AA battery reached 0.8 volts after about 3.11 hours.

A AA battery was discharged according to the half Watt rm test. The AA battery reached 1.1 volts after about 1.66 hours, and the AA battery reached 0.9 volts after about 3.05 hours.

Other embodiments are within the claims.

## Claims

1. An alkaline battery, comprising:
a cathode including manganese dioxide;
an anode including zinc particles;
an electrolytic solution; and
a separator disposed between the cathode and the anode, wherein a weight ratio of the manganese dioxide to the electrolytic solution dispersed through the anode, cathode, and separator is from about 2.2 to about 2.9 and a weight ratio of the zinc particles to the electrolytic solution dispersed throughout the anode, cathode, and separator is from about 0.9 to about 1.25,
and wherein the cathode includes carbon particles and has a porosity of from about 21% to about 28%,
and the anode has a porosity of from about 2 grams of zinc particles per cubic centimeter to about 2.45 grams of zinc particles per cubic centimeter.

2. An alkaline battery according to claim 1, wherein the carbon particles are nonsynthetic, nonexpanded graphite particles having an average particle size of less than about 20 microns.

3. An alkaline battery according to claims 1 or 2, wherein the alkaline battery is selected from the group consisting of AA batteries, AAA batteries, AAAA batteries, C batteries, and D batteries.

4. An alkaline battery according to any one of the preceding claims, wherein the separator comprises a nonwoven, non-membrane material and a second nonwoven, non-membrane material disposed along a surface of the first material.

5. An alkaline battery according to any of claims 1 to 4, wherein a weight ratio of the manganese dioxide to the electrolytic solution is from about 2.5 to about 2.9 and a weight ratio of the zinc particles to the electrolytic solution is from about 1.1 to about 1.25.

6. The alkaline battery according to any of claims 1 to 4, wherein a weight ratio of the manganese dioxide to the electrolytic solution is from about 2.5 to about 2.65 and weight ratio of the zinc particles to the electrolytic solution is from about 0.9 to about 1.2.

7. An alkaline battery according to any one of the preceding claims:
wherein the battery is an alkaline AA battery and gives at least about 0.6 hours to discharge to 1 Volt according to a 1 Watt continuous test.

8. An alkaline battery according to any one of the claims 1 to 6:
wherein the battery is an alkaline AAA battery and gives at least about 2 hours to discharge to.1.1 Volts according to a quarter Watt rm test.

## Patentansprüche

1. Alkalibatterie, die folgendes umfasst:
eine Kathode mit Mangandioxid;
eine Anode mit Zinkteilchen;
eine Elektrolytlösung; und
einen Scheider, der zwischen der Kathode und der Anode angeordnet ist, wobei ein Gewichtsverhältnis des Mangandioxids zu der durch die Anode, die Kathode und den Scheider verteilten Elektrolytlösung zwischen etwa 2,2 und 2,9 liegt, und wobei ein Gewichtsverhältnis der Zinkteilchen zu der durch die Anode, die Kathode und den Scheider verteilten Elektrolytlösung zwischen etwa 0,9 und 1,25 liegt;
und wobei die Kathode Kohlenstoffteilchen aufweist sowie eine Porosität zwischen etwa 21 % und etwa 28 %;
und wobei die Anode eine Porosität zwischen etwa 2 Gramm Zinkteilchen je Kubikzentimeter zu etwa 2,45 Gramm Zinkteilchen je Kubikzentimeter aufweist.

2. Alkalibatterie nach Anspruch 1, wobei die Kohlenstoffteilchen nicht-synthetische, nicht erweiterte Grafitteilchen mit einer durchschnittlichen Teilchengröße von weniger als etwa 20 Mikron darstellen.

3. Alkalibatterie nach Anspruch 1 oder 2, wobei die Alkalibatterie aus der Gruppe ausgewählt wird, die AA-Batterien, AAA-Batterien, AAAA-Batterien, C-Batterien und D-Batterien umfasst.

4. Alkalibatterie nach einem der vorstehenden Ansprüche, wobei der Scheider ein nicht gewebtes, nicht membranes Material und ein zweites nicht gewebtes, nicht membranes Material umfasst, das entlang einer Oberfläche des ersten Materials angeordnet ist.

5. Alkalibatterie nach einem der Ansprüche 1 bis 4, wobei ein Gewichtsverhältnis des Mangandioxids zu der Elektrolytlösung zwischen etwa 2,5 und etwa 2,9 liegt, und wobei ein Gewichtsverhältnis der Zinkteilchen zu der Elektrolytlösung zwischen etwa 1,1 und etwa 1,25 liegt.

6. Alkalibatterie nach einem der Ansprüche 1 bis 4, wobei ein Gewichtsverhältnis des Mangandioxids zu der Elektrolytlösung zwischen etwa 2,5 und etwa 2,65 liegt, und wobei ein Gewichtsverhältnis der Zinkteilchen zu der Elektrolytlösung zwischen etwa 0,9 und etwa 1,2 liegt.

7. Alkalibatterie nach einem der vorstehenden Ansprüche, wobei es sich bei der Batterie um eine AA-Alkalibatterie handelt, die gemäß einem 1-Watt-Dauertest für eine Entladung auf 1 Volt etwa 0,6 Stunden vorsieht.

8. Alkalibatterie nach einem der Ansprüche 1 bis 6,
wobei es sich bei der Batterie um eine AAA-Alkalibatterie handelt, die gemäß einem Viertelwatt-RM-Test für eine Entladung auf 1,1 Volt etwa 2 Stunden vorsieht.

## Revendications

1. Batterie alcaline comprenant :
une cathode contenant du dioxyde de manganèse ;
une anode contenant des particules de zinc ;
une solution électrolytique ; et
un séparateur disposé entre la cathode et l'anode,
dans laquelle le rapport en poids du dioxyde de manganèse à la solution électrolytique dispersé dans l'anode, la cathode et le séparateur est d'environ 2,2 à environ 2,9 et le rapport en poids des particules de zinc à la solution électrolytique dispersé dans l'anode, la cathode et le séparateur est d'environ 0,9 à 1,25,
et dans laquelle la cathode contient des particules de carbone et a une porosité d'environ 21% à environ 28%,
et l'anode a une porosité d'environ 2 grammes de particules de zinc par centimètre cube à environ 2,45 grammes de particules de zinc par centimètre cube.

2. Batterie alcaline selon la revendication 1, dans laquelle les particules de carbone sont des particules de graphite non synthétiques non expansées ayant une granulométrie moyenne inférieure à environ 20 micromètres.

3. Batterie alcaline selon la revendication 1 ou 2, laquelle est choisie dans l'ensemble constitué par les batteries AA, les batteries AAA, les batteries AAAA, les batteries C, et les batteries D.

4. Batterie alcaline selon l'une quelconque des revendications précédentes, dans laquelle le séparateur comprend un matériau non-tissé non-membrane et un deuxième matériau non-tissé non-membrane disposé le long d'une surface du premier matériau.

5. Batterie alcaline selon l'une quelconque des revendications 1 à 4, dans laquelle le rapport en poids du dioxyde de manganèse à la solution électrolytique est d'environ 2,5 à environ 2,9 et le rapport en poids des particules de zinc à la solution électrolytique est d'environ 1,1 à environ 1,25.

6. Batterie alcaline selon l'une quelconque des revendications 1 à 4, dans laquelle le rapport en poids du dioxyde de manganèse à la solution électrolytique est d'environ 2,5 à environ 2,65 et le rapport en poids des particules de zinc à la solution électrolytique est d'environ 0,9 à environ 1,2.

7. Batterie alcaline selon l'une quelconque des revendications précédentes, laquelle batterie est une batterie AA alcaline qui nécessite au moins environ 0,6 heure pour se décharger à 1 volt conformément à un test continu de 1 watt.

8. Batterie alcaline selon l'une quelconque des revendications 1 à 6, laquelle batterie est une batterie AAA alcaline qui nécessite au moins environ 2 heures pour se décharger à 1,1 volts conformément à un test rm de 0,25 watt.
